(19) Europäisches Patentamt
European Patent Office
Office européen des brevets

(11) Veröffentlichungsnummer: **0 205 630**
**B1**

# (12) EUROPÄISCHE PATENTSCHRIFT

(45) Veröffentlichungstag der Patentschrift: **25.10.89**

(51) Int. Cl.⁴: **H 02 M 3/156**

(21) Anmeldenummer: **85107614.1**

(22) Anmeldetag: **20.06.85**

(54) **Schaltregler sowie Anwendungen.**

(43) Veröffentlichungstag der Anmeldung: **30.12.86 Patentblatt 86/52**

(45) Bekanntmachung des Hinweises auf die Patenterteilung: **25.10.89 Patentblatt 89/43**

(84) Benannte Vertragsstaaten: **AT DE FR GB IT NL**

(56) Entgegenhaltungen:
**EP-A-0 027 847**
**DE-A-2 715 571**
**DE-A-3 402 479**

(73) Patentinhaber: **ANT Nachrichtentechnik GmbH, Gerberstrasse 33, D-7150 Backnang (DE)**

(72) Erfinder: **Grünsch, Eckhardt, Im Blütengarten 14, D-7151 Allmersbach i.Tal (DE)**

(74) Vertreter: **Wiechmann, Manfred, Dipl.- Ing., ANT Nachrichtentechnik GmbH Gerberstrasse 33 Postfach 11 20, D-7150 Backnang (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 205 630 B1

LIBER, STOCKHOLM 1989

**Beschreibung**

Die Erfindung betrifft einen Schaltregler gemäß dem Oberbegriff des Patentanspruchs 1 sowie Anwendungen. Ein solcher Schaltregler ist bekannt aus der DE-3 402 479 A1. Dort erfolgt eine Regelung auf einen konstanten Belastungsstrom durch Auswertung des Schaltregler-Ausgangsstromes.

Bei einem aus der DE-2 715 571 A1 bekannten Schaltregler erfolgt die Regelung der Ausgangsspannung durch die Impulsbreite bei konstanter Frequenz, bzw. konstanter Impulsbreite und variierender Frequenz. Als Regelkriterium wird der Spitzenstrom durch den Schalttransistor herangezogen. Bei einem Belastungssprung sind bei diesem Schaltregler mehrere Perioden zur Nachregelung nötig. Außerdem ist die Energieaufnahmezeit auf die Halbperiode beschränkt.

Aufgabe der Erfindung ist es, einen Schaltregler ausgehend vom Oberbegriff des Patentanspruchs 1 so auszubilden, daß er bei Regelung in Abhängigkeit der Ausgangsspannung ein gutes dynamisches Verhalten - insbesondere eine schnelle Regelung - aufweist. Außerdem sollen Anwendungen aufgezeigt werden. Diese Aufgabe wird durch die kennzeichnenden Merkmale des Patentanspruchs 1 oder 2 gelöst. Der Anspruch 3 zeigt eine vorteilhafte Weiterbildung auf.

Der Schaltregler nach der Erfindung weist folgende Vorteile auf:

Gegenüber dem Schaltreglerkonzept gemäß DE-2 715 571 A1 entfällt die Begrenzung des Tastverhältnisses auf T/2 (T = Periodendauer). Bei großen Belastungssprüngen wird die Energienachführung nicht in maximal T/2 Schritten, sondern während nur einem Ein-Ausschaltzyklus durchgeführt, wodurch Belastungssprünge schneller ausgeregelt werden. Störschwingungen, die beim Schaltregler gemäß DE-2 715 571 A1 durch die Nachregelung über mehrere Perioden entstehen, treten nicht auf.

Durch die konstante Energieabgabezeit bleibt bei Eingangsspannungsänderungen die Stromwelligkeit, die Gleichstromvormagnetisierung, der Laststrom und damit auch die Ausgangsspannung konstant. Dies bedeutet insbesondere beim Flußwandler einen hohen Ausregelfaktor bei Eingangsspannungsänderungen. Da der Spitzenstrom durch den Schalttransistor proportional zum Ausgangsstrom ist, kann die Strombegrenzung für den Schalttransistor gleichzeitig Laststrombegrenzung sein. Eine separate Laststromauswertung wie etwa beim Schaltregler gemäß Europäischen Patent 27 847 B1 kann entfallen.

Die Änderung der Schaltfrequenz findet bei Gleichstromvormagnetisierung der Speicherdrossel nur in Abhängigkeit von Eingangsspannungsänderungen statt und hängt vom Eingangsspannungsbereich sowie bei einem Schaltregler ohne Spannungstransformation von der Wahl des Tastverhältnisses bei minimaler Eingangsspannung ab. Dies ist ein Vorteil insbesondere gegenüber selbsterregten Spannungswandlern, deren Schaltfrequenzänderungen von der Eingangsspannung und von der Belastung abhängig sind.

Anhand der Zeichnungen wird die Erfindung nun näher erläutert. Es zeigen

- Fig. 1 ein Prinzipschaltbild eines Schaltreglers nach der Erfindung gemäß dem Flußwandlerprinzip,
- Fig. 2 Signal-Zeitdiagramme für den stationären Fall,
- Fig. 3 Signal-Zeitdiagramme bei Belastungs- und Eingangsspannungsänderungen,
- Fig. 4 ein Prinzipschaltbild für einen modifizierten Schaltregler nach der Erfindung mit Regelverstärker,
- Fig. 5 den Aufbau des Oszillatorbausteins,
- Fig. 6 ein Prinzipschaltbild eines Schaltreglers nach der Erfindung gemäß dem Sperrwandlerprinzip.

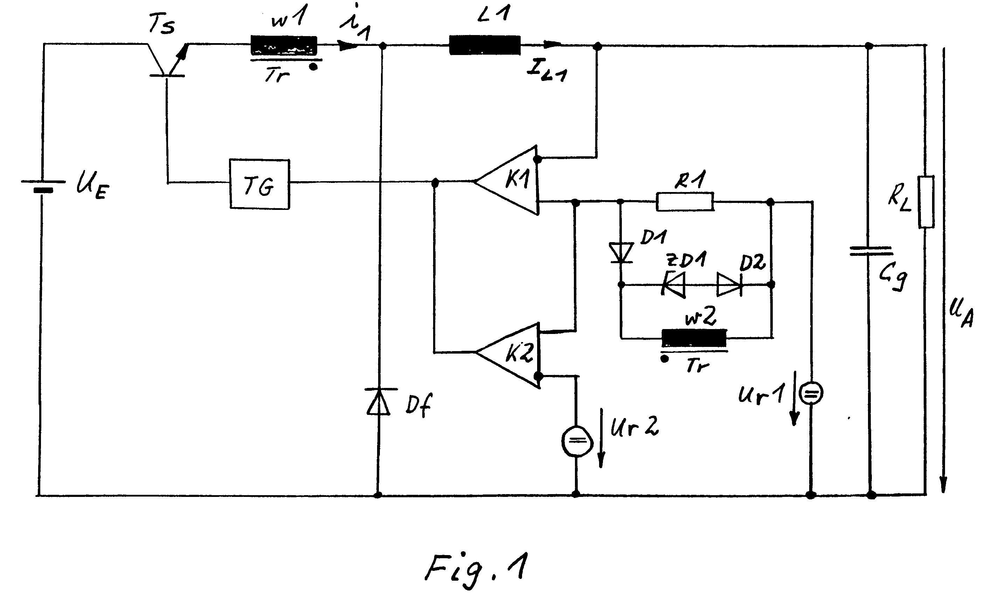

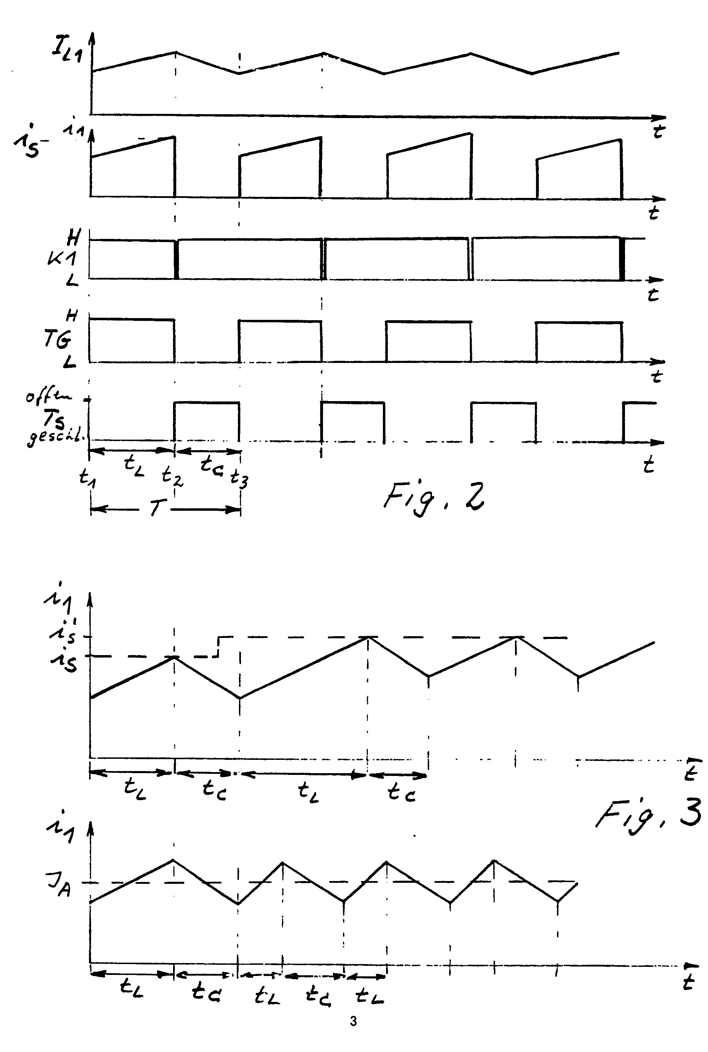

In Fig. 1 ist ein Schaltregler nach dem Flußwandlerprinzip dargestellt. Die Eingangsspannungsquelle $U_E$ des Wandlers ist über die Schaltstrecke des Schalttransistors Ts und die Speicherdrossel L1 mit dem Ausgang des Wandlers verbunden. Am Ausgang befindet sich ein Glättungskondensator Cg, an dem die Ausgangsspannung $U_A$ ansteht, und die Last $R_L$. Zwischen die Schaltstrecke des Schalttransistors Ts und die Speicherdrossel L1 ist die Primärwicklung w1 eines Stromübertragers Tr geschaltet. Eine Freilaufdiode Df ist zwischen die Verbindungsleitungen von Primärwicklung w1 und Speicherdrossel L1, bzw. Eingangsspannungsquelle $U_E$ und Last $R_L$ angeschlossen. Die Steuerung des Schalttransistors Ts erfolgt durch einen Taktgeber TG, der wiederum vom Ausgang einer Vergleichsstufe K1 beeinflusst wird. Der invertierende Eingang dieser Vergleichsstufe K1 ist an jenes Ende der Last $R_L$ angeschlossen, die zur Speicherdrossel L1 führt. Der nichtinvertierende Eingang der Vergleichsstufe K1 führt über eine Reihenschaltung, bestehend aus einem Widerstand R1 und einer Referenzspannungsquelle Ur1 zum anderen Ende der Last $R_L$. Der Widerstand R1 ist mit der Sekundärwicklung w2 über ein Diodennetzwerk D1, ZD1, D2 so beschaltet, daß bei fließendem Strom i1 durch den Schalttransistor Ts am Widerstand R1 eine Spannung $U_{R1}$ entsteht, die der Spannung an der Referenzspannungsquelle Ur1 entgegengerichtet ist. Die Funktion des Schaltreglers gemäß Fig. 1 wird nachfolgend anhand der Fig. 2 näher erläutert.

Die Signalverläufe gemäß Fig. 2 gelten für den geregelten Betrieb. Die Regelung des Spitzenstromes $i_S$ durch den Schalttransistor Ts erfolgt in Abhängigkeit der Ausgangsspannung $U_A$. Für den Fall, daß die Ausgangsspannung $U_A$ gleich der Referenzspannung Ur1 ist findet noch kein Regelbetrieb statt. Dieser tritt erst ein, wenn die Ausgangsspannung $U_A$ kleiner als die Referenzspannung Ur1 wird. Außerdem gelten die Signalverläufe gemäß Fig. 2 für den Fall, daß plötzliche Belastungs- und Eingangsspannungsänderungen nicht auftreten. Der Schalttransistor Ts wird zum Zeitpunkt $t_1 = 0$ geschlossen. Es fließt ein Strom i1 von der Spannungsquelle $U_E$ über den Schalttransistor Ts, die Primärwicklung w1 des Stromübertragers Tr und die Speicherdrossel L1 zur Last $R_L$. Gleichzeitig wird die Speicherdrossel L1 - Strom $I_{L1}$ - geladen. Der Strom i1 erzeugt über den Stromwandler Tr am Widerstand R1 einen Spannungsabfall $U_{R1}$, der proportional zum Strom i1 ist. Der nichtinvertierende Eingang der Vergleichsstufe K1 weist noch positiveres Potential auf als der invertierende Eingang. Der Ausgang von K1 führt daher H-Potential. Mit zunehmendem Spannungsabfall am Widerstand R1 wird das Potential am nichtinvertierenden Eingang von K1 immer negativer. Sobald der trapezförmige Strom i1, dessen Anstieg im wesentlichen durch die Höhe der Eingangsspannung $U_E$ und durch die Induktivität der Speicherdrossel L1 bestimmt wird, den Spitzenwert $i_S$ erreicht hat - Zeitpunkt $t_2$ - unterschreitet das Potential am invertierenden Eingang von K1 das Potential am nichtinvertierenden Eingang. Die Vergleichsstufe K1 spricht nun an, d.h. ihr Ausgang springt von H- auf L-Potential und schaltet über den Taktgeber TG den Schalttransistor Ts ab. Der Taktgeber TG ist im Ausführungsbeispiel gemäß Fig. 1 als monostabile Kippstufe ausgebildet. Bei Ansprechen der Vergleichsstufe K1 erhält die monostabile Kippstufe ein Triggersignal. Ihr Ausgang springt von H auf L und schaltet den Schalttransistor Ts ab. Nach Abschalten des Schalttransistors Ts fehlt der Spannungsabfall am Widerstand R1, da durch den Stromübertrager Tr kein Strom mehr fließt. Am nichtinvertierenden Eingang von K1 liegt dann nur noch die Referenzspannung Ur1. Da diese Referenzspannung Ur1 im Regelbetrieb größer als die Ausgangsspannung $U_A$ ist, wird der nichtinvertierende Eingang von K1 wieder positiver als der invertierende und das Ausgangssignal der Vergleichsstufe K1 springt zurück auf H-Potential. Die monostabile Kippstufe verbleibt nun für eine festgelegte und für jeden Schaltzyklus konstant bleibende Zeit $t_C$ ausgangsseitig auf L-Potential. Der Laststrom fließt bei abgeschaltetem Schalttransistor Ts - Energieabgabephase - über die Freilaufdiode $D_f$ und die Speicherdrossel L1. Erst nach Ablauf der Zeit $t_C$, die durch die Zeitkonstante der monostabilen Stufe vorgegeben ist, beginnt ab dem Zeitpunkt $t_3$ erneut eine Energieaufnahmephase. Zu diesem Zeitpunkt ändert sich das Ausgangspotential der monostabilen Kippstufe von L auf H und der Schalttransistor Ts wird wieder eingeschaltet.

Für das Tastverhältnis $\frac{t_L}{T}$ ($t_L$ = Dauer der Energieaufnahmephase; T = Periodendauer) gelten ohne zusätzliche Spannungstransformation folgende Beziehungen:

$$(U_E - U_A)\, t_L = U_A\, (T - t_L)$$

wobei $T - t_L = t_C = \text{const.}$ ist.

Daraus folgt:

$$\frac{t_L}{T} = \frac{U_A}{U_E}.$$

Das Tastverhältnis ist somit maximal nicht auf 1/2 begrenzt, wie beim Schaltregler gemäß DE-27 15 571 A1. Bei Verwendung einer Spannungstransformation zwischen Eingangs- und Ausgangsspannung kann jedes gewünschte Tastverhältnis gewählt werden. Andernfalls muß das Tastverhältnis an das Eingangs-/Ausgangsspannungsverhältnis angepaßt werden. Das Tastverhältnis wird so gewählt, daß bei minimal auftretender Eingangsspannung $U_E$ noch ein Regelbetrieb möglich ist.

Anhand der Figur 3 wird nun das Regelverhalten des Schaltreglers bei plötzlichen Belastungs- und Eingangsspannungsänderungen gezeigt. Im ersten Zeitdiagramm von Fig. 3 ist ein plötzlicher Belastungssprung angenommen, z. B. eine Erniedrigung des Widerstandes der Last $R_L$. Für diesen Belastungssprung muß der Energieaufnahmestrom $i_1$ vom niedrigen Spitzenwert $i_S$ auf den höheren Spitzenwert $i_S'$ ansteigen. Dies wird nun dadurch erreicht, daß die Energieaufnahmezeit $t_L$ so lange verlängert wird, bis der Trapez-Strom $i_1$ bei gleicher Steigung den höheren Wert $i_A'$ erreicht hat. Die Energieabgabezeit $t_C$ hingegen wird wie zuvor konstant gehalten. Die Nachregelung bei einem solchen Belastungssprung geschieht innerhalb nur einer Periode, d.h. in einer Periode wird die gesamte Mehrenergie, die für die große Belastung erforderlich ist, aufgenommen. Regelschwingungen über mehrere Perioden, wie sie bei anderen Schaltreglern auftreten, entfallen. Die Vergrößerung der Energieaufnahmezeit bei konstanter Energieabgabezeit $t_C$ ist gleichbedeutend mit einer Verkleinerung der Schaltfrequenz des Schaltreglers.

Im zweiten Diagramm gemäß Fig. 3 ist eine plötzliche Änderung der Eingangsspannung $U_E$ angenommen und zwar von einem kleinen Wert auf einen höheren Wert. Während dem ersten Schaltzyklus ist die Eingangsspannung $U_E$ klein. Einer solchen kleinen Eingangsspannung $U_E$ ist ein flacher Anstieg des Stromes $i_1$ zugeordnet. Da bei höherer Eingangsspannung $U_E$ die Energieabgabezeit $t_C$ wieder konstant ist und der gleiche Strommittelwert $J_A$ erreicht werden soll, muß die Leitezeit $t_L$ kleiner werden. Damit ergibt sich für den Strom $i_1$ nun ein steilerer Anstieg. Die konstante Energieabgabezeit $t_C$ ist wie zuvor von der Zeitkonstanten der monostabilen Stufe TG festgelegt.

Da der Spitzenstrom $i_S$ durch den Schalttransistor Ts proportional zum Laststrom ist, kann eine Kollektorstrombegrenzung des Schalttransistors Ts gleichzeitig zur Laststrombegrenzung herangezogen werden. Zur Kollektorstrom-/Laststrombegrenzung ist eine zweite Vergleichsstufe K2 vorgesehen, deren nichtinvertierender Eingang an den nichtinvertierenden Eingang der ersten Vergleichsstufe K1 angeschlossen ist. Der invertierende Eingang von K2 ist mit einer zweiten Referenzspannung Ur2 beaufschlagt. Der Ausgang von K2 ist wie der Ausgang von K1 an den Eingang der monostabilen Kippstufe TG angeschlossen. Die Referenzspannung Ur2 wird kleiner als der Wert der Ausgangsspannung $U_A$ und kleiner als der Wert der ersten Referenzspannung Ur1 gewählt, damit die zweite Vergleichsstufe K2 erst dann anspricht, wenn ein relativ großer Kollektorstrom über den Schalttransistor Ts fließt, vor dem die angeschlossene Last bzw. der Schalttransistor Ts geschützt werden muß.

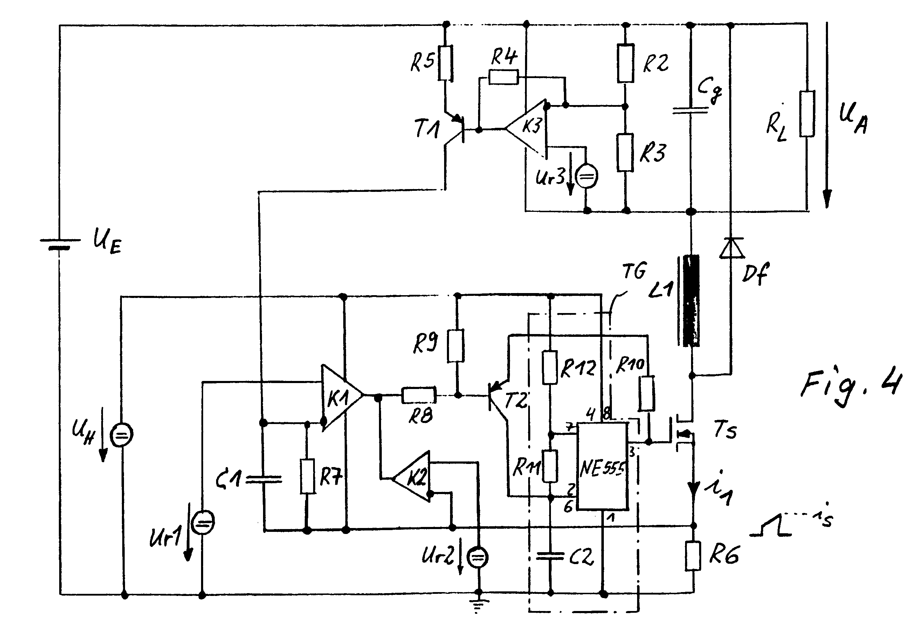

Im Ausführungsbeispiel gemäß Fig. 4 erfolgt in Abweichung zum Ausführungsbeispiel gemäß Fig. 1 die Auswertung der Ausgangsspannung $U_A$ über einen Regelverstärker mit den Widerständen R2, R3, R4, R5, der Verstärkerstufe K3 und nachfolgender Transistorverstärkerstufe T1. Die Verstärkerstufe K3 arbeitet für den Fall, daß der Spannungsabfall am Widerstand R3 größer wird als die Referenzspannung Ur3 als linearer Verstärker mit dem Gegenkopplungswiderstand R4. Die erste Vergleichsstufe K1 ist etwas anders beschaltet als in Fig. 1. Am nichtinvertierenden Eingang von K1 ist eine Referenzspannungsquelle Ur1 mit beispielsweise 6,2 V angeschlossen.

Der Strom $i_1$ über den Schalttransistor Ts wird über den in Serie liegenden Strommeßwiderstand R6 erfaßt. Der Ausgang der Transistorverstärkerstufe T1 ist an den mit der Parallelschaltung aus Widerstand R7 und Kondensator C1 beschalteten invertierenden Eingang von K1 angeschlossen. Am Widerstand R7 bildet sich ein Spannungsabfall, der proportional zur Ausgangsspannung $U_A$ ist. Durch den Kondensator C1 wird die Ausgangsspannungswelligkeit integriert. In Serie zur Parallelschaltung bestehend aus R7, C1 ist der Strommeßwiderstand R6 geschaltet derart, daß eine Regelung des Spitzenstromes $i_S$ über der Ausgangsspannung $U_A$ erfolgen kann. Der Ausgang der Vergleichsstufe K1 ist über eine Transistorstufe T2 mit den Widerständen R8, R9, R10 an den Taktgeber TG für den Schalttransistor Ts angeschlossen. Dieser Taktgeber TG besteht hier aus einem freischwingenden Rechteckoszillator, gebildet aus dem integrierten Schaltkreis NE 555, dessen Schwingfrequenz durch die Zeitkonstante des RC-Gliedes R11, C2 festgelegt ist. Nach Ansprechen der Vergleichsstufe K1, bzw. Transistorstufe T2 wird der freischwingende Rechteckoszillator zu monostabilem Verhalten gezwungen, d.h. nach Ansprechen der Vergleichsstufe K1 steuert der Rechteckoszillator den Schalttransistor Ts für eine immer gleichbleibende konstante Zeit nichtleitend. Die Funktion der Schaltung gemäß Fig. 4 wird nun, soweit sie von der Funktion der Schaltung gemäß Fig. 1 abweicht, erläutert. Der Rechteckoszillator TG wird über die Widerstände R11 und R12 und den Kondensator C2 bezüglich seinem Tastverhältnis und seiner Freischwingfrequenz eingestellt (Signetics, Lineare Integrierte Schaltungen 1972, Seite 173 - 177).

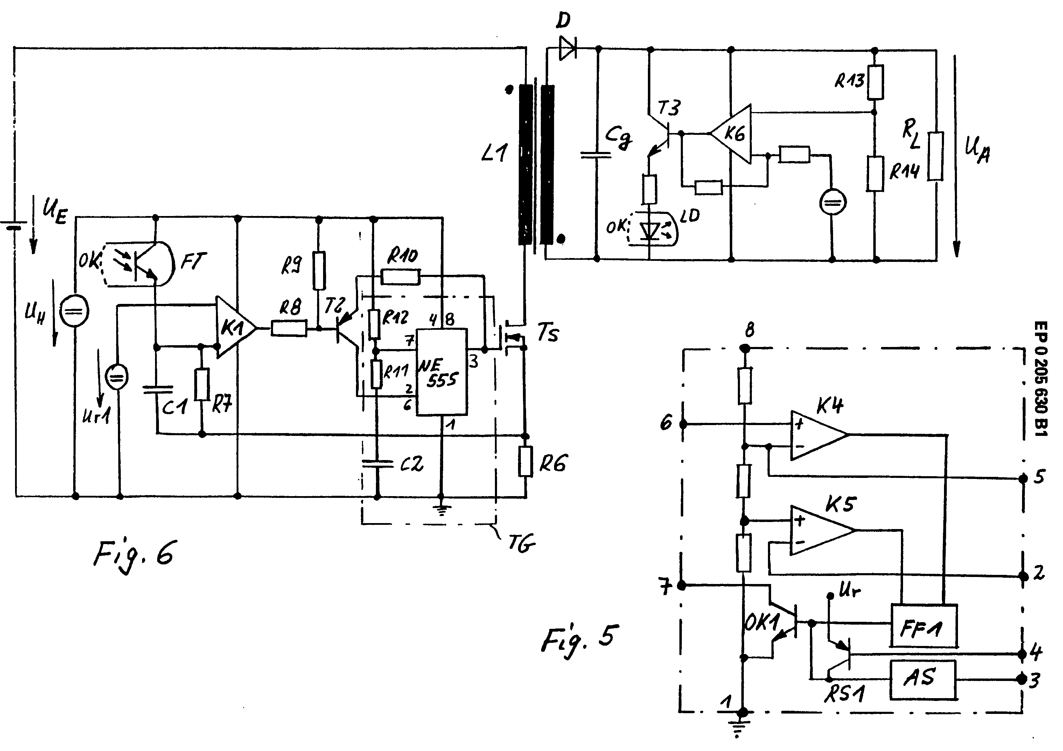

Den Innenaufbau des Schaltkreises NE 555 zeigt Fig. 5. Er besteht aus zwei Komparatoren K4, K5, einem Flip-Flop FF1, einer Ausgangsstufe AS, einer "Open-Kollektor"-Transistorstufe OK1 und einer Resetstufe RS1 sowie aus drei Spannungsteilerwiderständen (Signetics ... S. 173). Die maximale Leitezeit $t_L$ des Schalttransistors Ts wird durch die Beziehung:

$$t_{L\,max} = 0{,}685\,(R11 + R12)\,C2$$

und die konstante Energieabgabezeit durch die Beziehung:

$$t_C = 0{,}685 \cdot R11 \cdot C2$$

festgelegt.

Die Frequenz des Rechteckoszillators TG im unbeeinflußten Zustand ergibt sich zu:

$$f = \frac{1{,}46}{(R11 + R12)\,C2}$$

Der Rechteckoszillator TG schaltet den Schalttransistor so lange mit dieser Frequenz, bis die Ausgangsspannung $U_A$ soweit angestiegen ist, daß der Regelverstärker K3, T1 einsetzt; d.h. die Ausgangsspannung $U_A$ die Referenzspannung Ur3 übersteigt.

Bei durchgeschaltetem Schalttransistor Ts fließt ein Energieaufnahmestrom $i_L$, der proportional zum Laststrom $i_L$ ist, durch die Speicherdrossel L1 und den Strommeßwiderstand R6. Sobald der Spannungsabfall am Strommeßwiderstand R6 so groß ist, daß folgende Beziehung gilt:

$$U_{R6} + U_{R7} > Ur1$$

schaltet der Ausgang der Vergleichsstufe K1 auf Low-Potential und steuert die Transistorstufe T2 an. Es fließt nun ein Strom vom Leistungsausgang 3 des Schaltkreises NE 555 über den Widerstand R10, die Emitter-Kollektorstrecke des Transistors T2 und den Kondensator C2. Der Kondensator C2 wird hierdurch relativ schnell bis auf die Spannung 2/3 $U_H$ aufgeladen, welche den oberen Schaltpunkt des Schaltkreises NE 555 darstellt. Nach Erreichen dieser Spannung 2/3 $U_H$ schaltet der Leistungsausgang 3 auf Low und sperrt den Schalttransistor Ts. Auf diese Weise wird der Rechteckoszillator TG zu monostabilem Verhalten gezwungen. Nun folgt die Phase der konstanten Energieabgabezeit $t_C$ während der die Speicherdrossel L1 wie zuvor über die Freilaufdiode Df ihre Energie an die Last $R_L$ abgibt. Während der konstanten Energieabgabezeit bleibt der Ausgang 3 auf Low. Es kann über Widerstand R10 Emitter-Kollektorstrecke von T2 kein Strom mehr zum Trigger- bzw. Schwellwerteingang 2, 6 des Schaltkreises NE 555 fließen. Damit entlädt sich der Kondensator C2 über den Widerstand R11 in der Zeit $t_C$ vom Spannungswert 2/3 $U_H$ auf den Spannungswert 1/3 $U_H$. Wenn die Spannung am Kondensator C2 den Wert 1/3 $U_H$ erreicht hat, ist die untere Schaltschwelle des Schaltkreises NE 555 erreicht, sein Ausgang 3 springt auf High und schaltet den Schalttransistor Ts wieder ein. Der Zeitpunkt für den der Taktgeber TG in den monostabilen Betrieb übergeht, wird durch den Einsatz der Regelung d.h. von der Belastung bzw. von der Höhe der Eingangsspannung $U_E$ bestimmt. Dies macht sich wie zuvor in einer Verkürzung oder Verlängerung der Energieaufnahmephase bemerkbar, wohingegen die Energieabgabezeit $t_C$

konstant bleibt. Insgesamt ergibt sich bei Eingangsspannungsänderungen eine Frequenzänderung des Schaltreglers. Wie im Ausführungsbeispiel gemäß Fig. 1 kann der Kollektorstrom des Schalttransistors Ts und damit der Laststrom durch die Vergleichsstufe K2 begrenzt werden.

Der Schaltregler gemäß Fig. 6 arbeitet nach dem Sperrwandlerprinzip mit galvanischer Trennung durch die spannungsübersetzende Speicherdrossel L1. Die Ausgangsspannung $U_A$ wird hier über den Spannungsteiler R13, R14 erfaßt. Sobald das zur Ausgangsspannung $U_A$ proportionale Signal am nichtinvertierenden Eingang die Spannung am invertierenden Eingang der Vergleichsstufe K6 überschreitet, wird über den Ausgang von K6 der Transistor T3 aktiviert und ein Strom durch die Leuchtdiode LD des Optokopplers OK getrieben. Der Fototransistor FT dieses Optokopplers OK erzeugt wie beim Ausführungsbeispiel nach Fig. 4 an der Widerstands-/Kondensatorschaltung C1, R7 einen Spannungsabfall, der zusammen mit dem Spannungsabfall am Strommeßwiderstand R6 am invertierenden Eingang der Vergleichsstufe K1 wirksam wird. Über den Ausgang von K1, die Transistorstufe T2 und den Taktgeber TG wird der Schalttransistor Ts entsprechend dem Ausführungsbeispiel gemäß Fig. 4 gesteuert mit dem Unterschied, daß die Betriebsweise für einen Sperrwandler modifiziert ist. Auch beim Sperrwandler ergibt sich der Vorteil, daß das Tastverhältnis nicht auf T/2 begrenzt ist und im Bereich von $t_L/T = 0 - 0{,}95$ gewählt werden kann.

## Patentansprüche

1. Schaltregler mit Schalttransistor nach dem Prinzip des Fluß- oder Sperrwandlers zur Regelung der Ausgangsspannung und mit einer Einrichtung zum Konstanthalten der Energieabgabezeit ($t_C$) des Schaltreglers sowie zur Verkleinerung bzw. Vergrößerung der Energieaufnahmezeit ($t_L$) und einer Vergleichsstufe (K1), die eine Schaltreglergröße mit einer Referenzspannung (Ur1) vergleicht, dadurch gekennzeichnet, daß die Vergleichsstufe (K1) vorgesehen ist zum Vergleich eines Signals proportional zur Ausgangsspannung ($U_A$) mit einem Signal proportional zur Höhe des Spitzenstromes ($i_S$) durch den Schalttransistor (Ts) und einer überlagerten Referenzspannung (Ur1), und daß die Vergleichsstufe (K1) an einen den Schalttransistor (Ts) in seinem Schaltverhalten beeinflussenden Taktgeber (TG) angeschlossen ist derart, daß nach Ansprechen der Vergleichsstufe (K1) der Taktgeber (TG) zu monostabilem Verhalten gezwungen wird.

2. Schaltregler mit Schalttransistor nach dem Prinzip des Fluß- oder Sperrwandlers zur Regelung der Ausgangsspannung und mit einer Einrichtung zum Konstanthalten der Energieabgabezeit ($t_C$) des Schaltreglers sowie zur Verkleinerung bzw. Vergrößerung der Energieaufnahmezeit ($t_L$) und einer Vergleichsstufe (K1), die eine Schaltreglergröße mit einer Referenzspannung (Ur1) vergleicht, dadurch gekennzeichnet, daß die Vergleichsstufe (K1) vorgesehen ist zum Vergleich einer Referenzspannung (Ur1) mit einem Signal proportional zur Höhe der Ausgangsspannung ($U_A$) und einem überlagerten Signal proportional zur Höhe des Spitzenstromes ($i_S$) durch den Schalttransistor (Ts) und daß die Vergleichsstufe (K1) an einen den Schalttransistor (Ts) in seinem Schaltverhalten beeinflussenden Taktgeber (TG) angeschlossen ist derart, daß nach Ansprechen der Vergleichsstufe (K1) der Taktgeber (TG) zu monostabilem Verhalten gezwungen wird.

3. Schaltregler nach Anspruch 1 oder 2, dadurch gekennzeichnet, daß eine weitere Einrichtung (K2) zur Begrenzung des Spitzenstromes ($i_S$) durch den Schalttransistor (Ts) ebenfalls an den Taktgeber (TG) angeschlossen ist.

## Claims

1. Switch mode controller including a switching transistor operating according to the principle of a buck or flyback converter for regulating the output voltage and a device for keeping constant the energy discharge time ($t_C$) of the switch mode controller and for reducing or increasing, respectively, the energy intake time ($t_L$) and a comparison stage (K1) which compares a switch mode controller value with a reference voltage (Ur1), characterised in that the comparison stage (K1) is provided to compare a signal proportional to the output voltage ($U_A$) with a signal proportional to the magnitude of the peak current ($i_S$) through the switching transistor (Ts) and a superposed reference voltage (Ur1); and the comparison stage (K1) is connected to a clock pulse generator (TG) which influences the switching behaviour of the switching transistor (Ts) in such a manner that, upon response of the comparison stage (K1), the clock pulse generator (TG) is forced into monostable behaviour.

2. Switch mode controller including a switching transistor operating according to the principle of a buck or flyback converter for regulating the output voltage and a device for keeping constant the energy discharge time ($t_C$) of the switch mode controller and for reducing or increasing, respectively, the energy intake time ($t_L$) and a comparison stage (K1) which compares a switch mode controller value with a reference voltage (Ur1), characterised in that the comparison stage (K1) is provided to compare the reference voltage (Ur1) with a signal proportional to the magnitude of the output voltage ($U_A$) and a superposed signal proportional to the magnitude of the peak current ($i_S$) through the switching transistor (Ts); and the comparison stage (K1) is connected to a clock pulse generator (TG) which influences the switching behaviour of the switching transistor (Ts) in such a manner that, upon response of the comparison stage (K1), the clock pulse generator (TG) is forced into monostable behaviour.

3. Switch mode controller according to claim 1 or 2, characterised in that a further device (K2) for limiting the peak current ($i_S$) through the switching transistor (Ts) is likewise connected to the clock pulse generator (TG).

**Revendications**

1. Régulateur de coupure/fermeture avec transistor interrupteur, selon le principe du convertisseur de flux ou convertisseur à blocage, pour réguler la tension de sortie, et avec un dispositif pour maintenir constant le temps de décharge d'énergie ($t_C$) du régulateur de coupure/fermeture ainsi que pour réduire ou, selon le cas, accroître le temps d'absorption d'énergie ($t_L$), et avec un étage comparateur (K1) qui compare une grandeur du régulateur à une tension de référence (Ur1), caractérisé par le fait que l'étage comparateur (K1) est prévu pour la comparaison d'un signal proportionnel à la tension de sortie ($U_A$) avec un signal proportionnel au niveau du courant de crête ($i_S$) passant par le transistor interrupteur (Ts) et avec une tension de référence superposée (Ur1), et par le fait que l'étage comparateur (K1) est raccordé à un rythmeur (TG) qui influence le transistor interrupteur (Ts) dans son comportement de coupure/fermeture de manière qu'après réponse de l'étage comparateur (K1) le rythmeur (TG) soit contraint à un comportement monostable.

2. Régulateur de coupure/fermeture avec transistor interrupteur, selon le principe du convertisseur de flux ou convertisseur à blocage, pour réguler la tension de sortie, et avec un dispositif pour maintenir constant le temps de décharge d'énergie ($t_C$) du régulateur de coupure/fermeture ainsi que pour réduire ou, selon le cas, accroître le temps d'absorption d'énergie ($t_L$), et avec un étage comparateur (K1) qui compare une grandeur du régulateur à une tension de référence (Ur1), caractérisé par le fait que l'étage comparateur (K1) est prévu pour la comparaison d'une tension de référence (Ur1) avec un signal proportionnel au niveau de la tension de sortie ($U_A$) et avec un signal superposé proportionnel au niveau du courant de crête ($i_S$) passant par le transistor interrupteur (Ts), et par le fait que l'étage comparateur (K1) est raccordé à un rythmeur (TG) qui influence le transistor interrupteur (Ts) dans son comportement de coupure/fermeture de manière qu'après réponse de l'étage comparateur (K1) le rythmeur (TG) soit contraint à un comportement monostable.

3. Régulateur de coupure/fermeture selon revendication 1 ou 2, caractérisé par le fait qu'un autre dispositif (K2) pour limiter le courant de crête ($i_S$) passant par le transistor interrupteur (Ts) est également raccordé au rythmeur (TG).

UA
RL
Cg
Ur1
D2
R1
ZD1
w2
Tr
D1
Ur2
IL1
L1
K1
K2
Fig. 1
Df
i1
w1
Tr
TG
Ts
UE

$I_{L1}$
t
$i_S$
$i_1$
t
H
K1
L
t
H
TG
L
t
offen
$T_S$
geschl.
t
$t_L$
$t_C$
$t_1$
$t_2$
$t_3$
T
Fig. 2
$i_1$
$i_s'$
$i_s$
t
$t_L$
$t_C$
$t_L$
$t_C$
Fig. 3
$i_1$
$J_A$
t
$t_L$
$t_C$
$t_L$
$t_C$
$t_L$

Fig. 4
UA
RL
Df
Cg
L1
Ts
i1
is
R6
R2
R3
TG
R10
NE555
R12
C2
R11
T2
K3
Ur3
R4
R5
T1
R9
R8
K2
Ur2
K1
R7
C1
Ur1
UE
UH

D
L1
Cg
T3
K6
R13
R14
RL
UA
OK
LD
UE
UH
FT
K1
R9
R8
T2
R10
R12
R11
NE 555
Ts
Ur1
C1
R7
C2
R6
TG
8
6
7
K4
K5
5
2
Ur
OK1
FF1
AS
RS1
4
3
1

Fig. 6

Fig. 5